# EUROPÄISCHE PATENTSCHRIFT

(11) **EP 4 235 008 B1**
(45) Veröffentlichungstag und Bekanntmachung des Hinweises auf die Patenterteilung: **27.08.2025**
(21) Anmeldenummer: 23155799.2
(22) Anmeldetag: 09.02.2023
(51) Int. Cl.: F16L 47/03, F16L 55/18, F16L 55/16, F16L 47/16

(54) **HEIZWENDELMUFFE ZUM VERBINDEN SOWIE VERFAHREN ZUM VERBINDEN VON ZWEI ROHRSTÜCKEN MIT NACHLAUFENDEM MEDIUM**
HEATING COIL SLEEVE FOR CONNECTING AND METHOD FOR CONNECTING TWO PIPE SECTIONS WITH DISCHARGING MEDIUM
MANCHON À FILAMENT CHAUFFANT POUR RACCORDER ET PROCÉDÉ DE RACCORDEMENT DE DEUX ÉLÉMENTS DE TUYAU ÀVEC DE DÉVERSEMENT DE FLUIDE

(30) Priorität: 25.02.2022 DE 102022104515
(43) Veröffentlichungstag der Anmeldung: 30.08.2023
(73) Patentinhaber: Frank GmbH, 64546 Mörfelden-Walldorf (DE)
(72) Erfinder: Rosenau, Robin, 63225 Langen (DE); Schön, Till, 64546 Mörfelden -Walldorf (DE)
(74) Vertreter: Friderichs, Gunther

(56) Entgegenhaltungen:
- DE-B1- 2 352 571
- DE-U1- 202004 001 554
- DE-U1- 202004 001 554
- KR-B1- 100 900 215
- US-A- 3 826 521

## Beschreibung

### Gebiet der Erfindung

Die Erfindung betrifft eine Heizwendelmuffe zum Verbinden von Kunststoffrohren. Weiter betrifft die Erfindung ein Verfahren zum Verbinden von Kunststoffrohrsystemen. Die Erfindung bezieht sich insbesondere auf das Verbinden von Rohrenden, wobei bei zumindest einem Rohrende ein nachlaufendes Medium austritt.

### Hintergrund der Erfindung

Kunststoffrohre, welche insbesondere als Wasserleitungen, Abwasserleitungen oder zum Durchführen von Gas verwendet werden, können mittels sogenannter Heizwendelmuffen miteinander verbunden werden.

Bei einer Heizwendelmuffe ist in die Innenwand der Muffe ein gewendelter elektrischer Leiter angeordnet. Über Anschlüsse kann Strom durch den Leiter geleitet werden, so dass sich dieser aufgrund des elektrischen Widerstands erwärmt und das Material sowohl der Innenwand der Heizwendelmuffe als auch der Außenwand des Rohrstücks, auf die die Heizwendelmuffe aufgeschoben ist, schmelzflüssig wird.

So kann auf einfache Weise eine homogene Verbindung bereitgestellt werden, mit der sich insbesondere im Reparaturfall Rohrstücke druckklassengerecht verbinden lassen. Problematisch ist die Verwendung von Heizwendelmuffen bei Rohren mit einem sogenannten nachlaufenden Medium. So haftet beispielsweise Flüssigkeit, wie Wasser, in einem Rohrsystem an der Rohrwand, so dass nach und nach kleinere Flüssigkeitsmengen an der Verbindungsstelle des an sich gelehrten Rohrsystems austreten.

Bei Verwendung einer Heizwendelmuffe ist es allerdings erforderlich, dass die Kontaktfläche zwischen Muffe und Rohrende sauber und trocken ist. Im Reparaturfall wird hierzu in der Regel das zu verbindende Rohrende nicht nur gesäubert, sondern mechanisch bearbeitet, insbesondere muss an der Oberfläche Material abgetragen werden, um jegliche Verunreinigungen und Anhaftungen zu entfernen. Die erfolgt in der Regel spanend.

Bei Rohrsystemen mit einem nachlaufenden Medium ist die Verwendung einer Heizwendelmuffe nicht möglich. Bereits geringe Mengen des nachlaufenden Mediums im Bereich der Schweißzone führen dazu, dass die Schweißverbindung unbrauchbar ist.

Die Patentschrift DE 41 23 383 C2 schlägt daher vor, zwei Rohrenden zunächst mit einem Dichtkörper zu verbinden, welcher jeweils dann an der Innenwand der Rohrenden anliegende Dichtlippen aufweist. Sodann wird eine Heizwendelmuffe über den Verbindungsbereich geschoben und die Rohre werden miteinander verbunden.

Die Patentschrift DE 195 42 114 C1 zeigt eine dreiteilige Verbindung, bei der ein Zwischenstück aufgeschoben und von beiden Seiten mittels einer Muffe mit jeweils zwei Heizwendeln verbunden wird. Dies ist recht aufwendig, da vier, teils weit vom Rohrende entfernte Schweißzonen

Da aufgrund des dichtenden Einsatzes kein nachlaufendes Medium austritt, ist so im Prinzip eine homogene Schweißung der beiden Rohrenden möglich.

Nachteilig an dieser Vorgehensweise ist allerdings, dass der dichtende Einsatz nur eingebracht werden kann, indem die Rohrenden in axialer Richtung aufeinander zu bewegt werden. Dies ist wiederum in vielen Fällen, insbesondere, wenn im Reparaturfall ein beschädigter Rohrabschnitt herausgeschnitten und gegen einen anderen Rohrabschnitt ersetzt werden soll, nicht möglich.

In derartigen Fällen muss daher weiterhin in der Regel auf andere Verbindungstechnologien, wie das Verwenden von Pressdichtungen, zurückgegriffen werden, die häufig allerdings nicht die gewünschte Druckdichtigkeit und/oder Lebensdauer aufweisen.

Heizwendelmuffen sind aus den Dokumenten DE 2 352 571 B, DE 20 2004 001 554 U1, KR 10 0900215 B1 und US 3826521 A bekannt.

### Aufgabe der Erfindung

Der Erfindung liegt demgegenüber die Aufgabe zugrunde, die genannten Nachteile des Standes der Technik zumindest zu reduzieren. Es ist insbesondere eine Aufgabe der Erfindung, die Rohrenden von zwei Kunststoffrohren trotz nachlaufendem Medium durch eine homogene Schweißverbindung druckklassengerecht miteinander zu verbinden.

### Zusammenfassung der Erfindung

Die Aufgabe der Erfindung wird bereits durch eine Heizwendelmuffe zum Verbinden von Kunststoffrohren sowie durch ein Verfahren zum Verbinden von zwei Rohrstücken mit einem nachlaufenden Medium nach einem der unabhängigen Ansprüche gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft eine Heizwendelmuffe zum Verbinden von Kunststoffrohren.

Die Heizwendelmuffe wird aus zumindest zwei, vorzugsweise genau zwei, getrennten Komponenten gebildet, nämlich einer ersten Muffenhälfte und einer zweiten Muffenhälfte. Unter einer Muffenhälfte im Sinne der Erfindung wird ein beliebiges Bauteil verstanden, welches einen Teilbereich der Heizwendelmuffe bildet. Die beiden Hälften der Heizwendelmuffe müssen daher weder gleichlang noch gleichschwer sein.

Gemäß der Erfindung umfasst die erste Muffenhälfte zumindest zwei voneinander beabstandete Dichtungen. Es handelt sich insbesondere um Dichtungen, die in die Innenwand der ersten Muffenhälfte, beispielsweise in eine Nut der Innenwand, eingesetzt sind.

Die Dichtungen sind axial voneinander beabstandet.

Dies ermöglicht es, die erste Muffenhälfte über den Verbindungsbereich von zwei Rohren zu schieben, so dass eine Dichtung das erste Rohrende und eine andere Dichtung das zweite Rohrende umgibt.

So kann durch Verschieben der ersten Muffenhälfte eine Fluidverbindung bereitgestellt werden, welche zumindest verhindert, dass ein nachlaufendes Medium aus dem Verbindungsbereich austritt.

Weiter umfasst die Heizwendelmuffe eine zweite Muffenhälfte, welche mit der ersten Muffenhälfte mechanisch verbindbar ist. Zumindest eine der Muffenhälften, vorzugsweise sowohl die erste als auch die zweite Muffenhälfte, umfasst eine Heiwendelzone. Unter einer mechanischen Verbindung wird verstanden, dass die Muffenhälften axial zueinander fixiert und im verbundenen Zustand nicht mehr verschiebbar sind, insbesondere formschlüssig. Dies kann z.B. mittels einer Verschraubung, einer Klemme oder eines Riegels erreicht werden.

Insbesondere kann die mechanische Verbindung derart ausgebildet sein, dass die Muffenhälften in einer axialen Richtung zusammenpressbar ist.

Die Heizwendelmuffe ist vorzugsweise zweigteilt und umfasst genau zwei Muffenhälften.

Nach dem Verbinden der beiden Muffenhälften miteinander kann so mittels der Heizwendelzonen eine Schweißverbindung der Rohrenden mit der Heizwendelmuffe bereitgestellt werden, ohne dass die Gefahr besteht, dass nachlaufendes Medium die Kontaktflächen verunreinigt.

Vorzugsweise ist eine Heizwendelzone in einem Verbindungsbereich zwischen der ersten Muffenhälfte und einem ersten Rohrende, in einem Verbindungsbereich zwischen der zweiten Muffenhälfte und dem zweiten Rohrende und in einem Verbindungsbereich zwischen den Muffenhälten angeordnet.

Gemäß einer bevorzugten Ausführungsform der Erfindung ist insbesondere vorgesehen, dass sich eine Heizwendelzone, insbesondere eine einzige Heizwendelzone, in verbundenem Zustand der Heizwendelmuffe von der Innenwand einer Muffenhälfte, insbesondere der zweiten Muffenhälfte, ausgehend über die andere Muffenhälfte erstreckt.

Über diese Heizwendelzone kann die zweite Muffenhälfte sowohl mit dem Rohrende als auch mit der ersten Muffenhälfte geschweißt werden.

Erste und zweite Muffenhälfte sowie Rohrende können so durch zumindest eine, vorzugsweise genau eine homogene Schweißzone miteinander verbunden werden.

Hierzu kann, wie es bei einer Ausführungsform der Erfindung vorgesehen ist, die Innenwand der zweiten Muffenhälfte einen sich konisch aufweitenden Bereich aufweisen, über den sich die Heizwendelzone erstreckt. Die erste Muffenhälfte weist eine komplementär ausgebildete Innenwand auf.

Der konische Bereich hat zum einen den Vorteil, dass beim Verbinden der beiden Muffenhälften sich die konisch ausgebildeten Flächen aufeinanderpressen, was sicherstellt, dass im Bereich der gesamten Schweißzone ein hinreichender Kontakt vorhanden ist.

Des Weiteren kann die Heizwendelzone insbesondere einen zylindrischen und einen konischen Bereich aufweisen.

Der zylindrische Bereich erstreckt sich um die Außenwand des Rohrendes und der konische Bereich erstreckt sich um die Außenwand der ersten Heizwendelmuffe.

Vorzugsweise erstreckt sich die Heizwendelzone über den Bereich, in dem sich der zylindrische Bereich in einen konischen Bereich aufweitet. An dieser Stelle liegen die Außenwand des Rohrendes, die Innenwände der ersten und zweiten Muffenhälfte und auch das stirnseitige Ende der Außenwand der ersten Muffenhälfte unmittelbar aneinander.

So kann über die Heizwendelzone ein Schweißbereich erzeugt werden, welcher sich homogen über die Rohrwand und die angrenzende Verbindungsstelle der Muffenhälften erstreckt.

Die Muffenhälften sind gemäß der Erfindung über eine Gewindeverbindung miteinander verbindbar, nämlich über ein Außengewinde, das sich um die Außenwand der ersten Muffenhälfte und ein Innengewinde, das sich entlang der Innenwand der zweiten Muffenhälfte erstreckt.

Über eine derartige Gewindeverbindung kann auf einfache Weise eine hinreichend hohe Axialkraft erzielt werden, welche die Muffenhälften, insbesondere im Bereich einer Heizwendelzone, aufeinanderpresst.

Gemäß einer Weiterbildung der Erfindung umfasst die erste Muffenhälfte einen Griff. Der Griff kann insbesondere als Kragen ausgebildet werden.

Über den Griff kann die Muffenhälfte auf besonders einfache Weise über den Verbindungsbereich gezogen werden.

Die Heizwendelmuffe ist aus einem Thermoplast, insbesondere aus Polypropylen oder Polyethylen, ausgebildet sein.

Das erfindungsgemäße System eignet sich nahezu für beliebige Durchmesser, insbesondere von 50 mm bis 500 mm Außendurchmesser.

Es lassen sich mit dem System Rohrsysteme druckklassengerecht druckdicht verbinden, insbesondere bis 16 bar, vorzugsweise bis 40 bar.

Die Erfindung betrifft des Weiteren ein Verfahren von zwei Rohrstücken mit einem nachlaufenden Medium, wobei insbesondere die vorstehend beschriebene Heizwendelmuffe verwendet wird.

Das Verfahren umfasst die folgenden Schritte:
- Bereitstellen einer ersten Muffenhälfte mit zumindest zwei voneinander beabstandeten Dichtungen und einer ersten Heizwendelzone,
- Bereitstellen einer zweiten Muffenhälfte mit einer zweiten Heizwendelzone,
- Aufbringen der ersten Muffenhälfte auf ein erstes Rohrende, Aufbringen der zweiten Muffenhälfte auf ein zweites Rohrende,
- Aufschieben der ersten Muffenhälfte auf das zweite Rohrende, wobei erstes und zweites Rohrende durch die zwei voneinander beabstandeten Dichtungen dichtend mit einander verbunden werden,
- Verbinden der ersten und der zweiten Muffenhälfte,
- Verschweißen des ersten Rohrendes mit der ersten Muffenhälfte mittels der ersten Heizwendelzone,
- Verschweißen des zweiten Rohrendes mit der zweiten Muffenhälfte und Verschweißen der zweiten Muffenhälfte mit der ersten Muffenhälfte mittels der zweiten Heizwendelzone.

Die zweite Heizwendelzone ist vorzugsweise als eine einzige Heizwendelzone ausgebildet, welche sich über den Bereich erstreckt, an welchem die Außenwand des zweiten Rohres die Innenwand der zweiten Muffenhälfte und die Außenwand der ersten Muffenhälfte aneinandergrenzen.

Durch die Erfindung kann auf einfache Weise eine Schweißverbindung nach Richtlinie DVS 2207-1 (08/2015) erzeugt werden.

### Kurzbeschreibung der Zeichnungen

Der Gegenstand der Erfindung soll im Folgenden anhand eines Ausführungsbeispiels bezugnehmend auf die Zeichnungen Fig. 1 bis Fig. 8 näher erläutert werden.
Fig. 1 zeigt in einer perspektivischen Ansicht ein Ausführungsbeispiel einer erfindungsgemäßen Heizwendelmuffe.
Fig. 2 ist eine perspektivische Ansicht der ersten Muffenhälfte.
Fig. 3 ist ein Längsschnitt der ersten Muffenhälfte.
Fig. 4 ist eine perspektivische Ansicht der zweiten Muffenhälfte.
Fig. 5 ist ein Längsschnitt der zweiten Muffenhälfte. Bezugnehmend auf Fig. 6a bis Fig. 6d sollen die Verfahrensschritte bei Verwendung der erfindungsgemäßen Heizwendelmuffe näher erläutert werden.
Fig. 7 ist ein Längsschnitt der mit der Heizwendelmuffe verbundenen Rohrenden.
Fig. 8 zeigt ein Rohrstück, welches mit den erfindungsgemäßen Heizwendelmuffen repariert wurde.

### Detaillierte Beschreibung der Zeichnungen

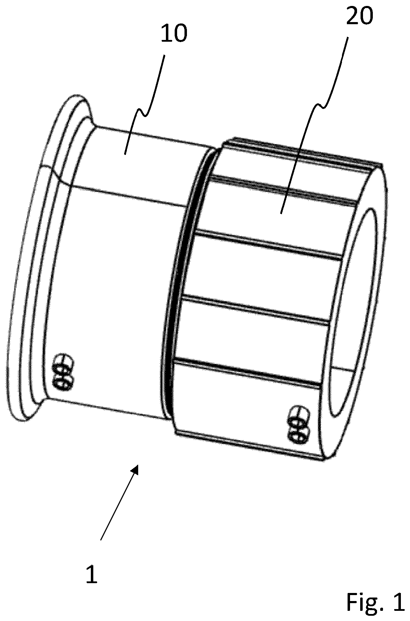

Fig. 1 zeigt in einer perspektivischen Ansicht ein Ausführungsbeispiel einer erfindungsgemäßen Heizwendelmuffe 1.

Die Heizwendelmuffe 1 umfasst eine erste Muffenhälfte 10 sowie eine zweite Muffenhälfte 20, welche miteinander verbunden sind.

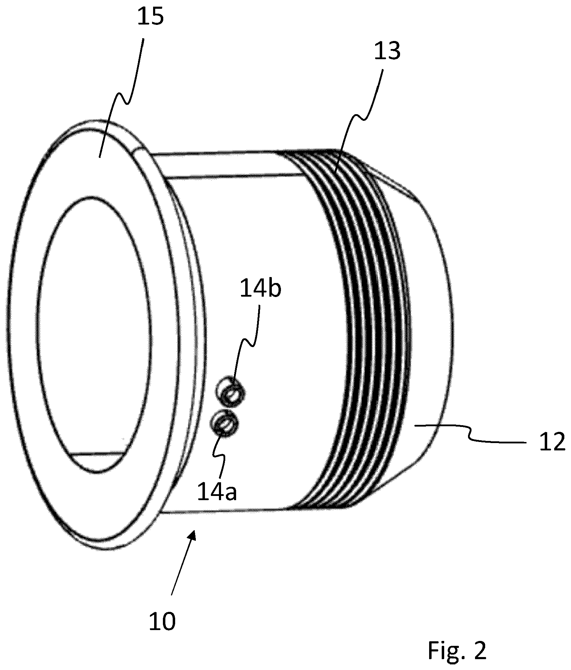

Fig. 2 ist eine perspektivische Ansicht der ersten Muffenhälfte 10.

Die erste Muffenhälfte 10 umfasst, angrenzend an die zweite Muffenhälfte, zunächst nach der Stirnfläche einen konischen Bereich 12.

Sodann folgt ein zylindrischer Bereich mit einem Außengewinde 13.

Das Außengewinde 13 ist integraler Bestandteil der ersten Heizwendelmuffe 10.

Sowohl die erste Heizwendelmuffe 10 als auch die zweite Heizwendelmuffe 20 können sowohl als Spritzgussteil, insbesondere mit integrierten Heizwendelzonen als auch als spanabhebend hergestelltes Teil ausgebildet sein.

Von der Stirnseite ausgehend hinter dem Gewinde angeordnet sind zwei Anschlüsse 14a, 14b an der Außenwand. Die Anschlüsse 14a, 14b dienen dem elektrischen Anschluss der Stromquelle, über die die Heizwendel der Heizwendelzone erwärmt werden.

Weiter umfasst die erste Muffenhälfte 10 einen Kragen 15, welcher als Griff dient, um die erste Muffenhälfte 10 über den Verbindungsbereich zu schieben.

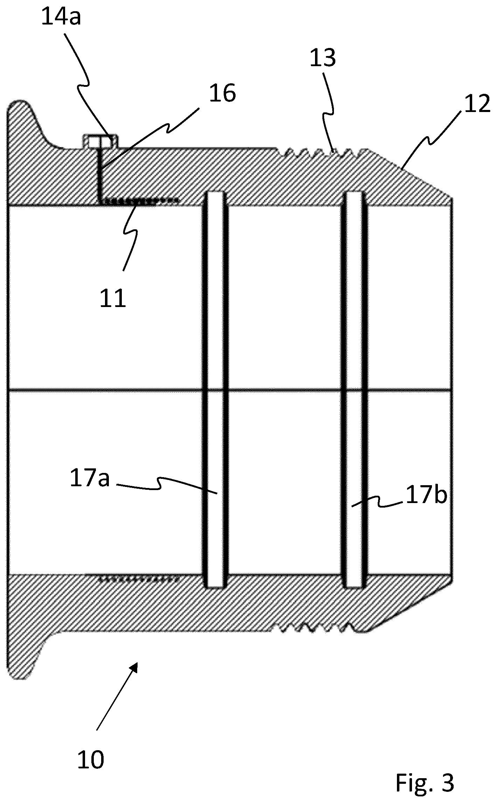

Fig. 3 ist ein Längsschnitt der ersten Muffenhälfte 10.

Nach dem konischen Bereich 12 folgen zunächst innenseitig zwei Dichtungen 17a, 17b, welche in axialer Richtung voneinander beabstandet sind.

Die Dichtungen 17a, 17b können beispielsweise in eine Nut eingesetzt sein. Die Dichtungen 17a, 17b können beispielsweise als O-Ring oder als Lippendichtung ausgebildet sein.

Von der zweiten Muffenhälfte aus gesehen hinter den Dichtungen 17a, 17b folgt die erste Heizwendelzone 11 der ersten Muffenhälfte 10.

Über Durchführungen 16 durch die Rohrwand ist die Heizwendelzone 11 mit den elektrischen Anschlüssen 14a, 14b verbunden.

Das Außengewinde 13 folgt in diesem Ausführungsbeispiel unmittelbar auf den konischen Bereich 12. Weiter befindet sich das Außengewinde 13 zumindest abschnittsweise zwischen den Dichtungen 17a, 17b.

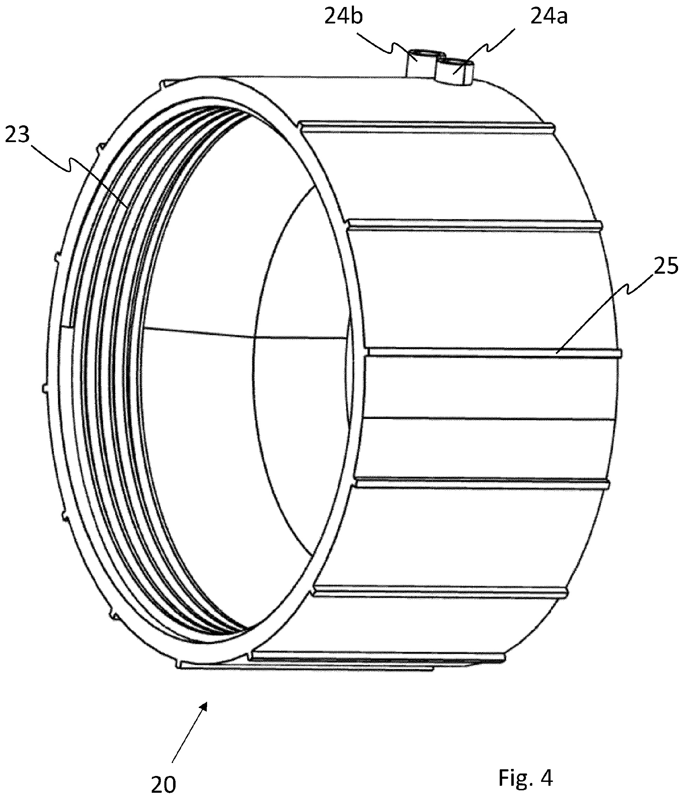

Fig. 4 ist eine perspektivische Ansicht der zweiten Muffenhälfte 20.

Die zweite Muffenhälfte 20 ist als Ring ausgebildet. Gesehen von der ersten Muffenhälfte aus, umfasst die zweite Muffenhälfte angrenzend an die Stirnfläche ein Innengewinde 23.

Die Außenwand der zweiten Muffenhälfte kann eine Profilierung 25, beispielsweise in Form von Stegen, aufweisen, um das Aufschrauben der zweiten Muffenhälfte 20 auf die erste Muffenhälfte zu erleichtern.

Auch die zweite Muffenhälfte umfasst zwei Anschlüsse 24a, 24b, welche dem elektrischen Anschluss an die zweite Heizwendelzone dienen.

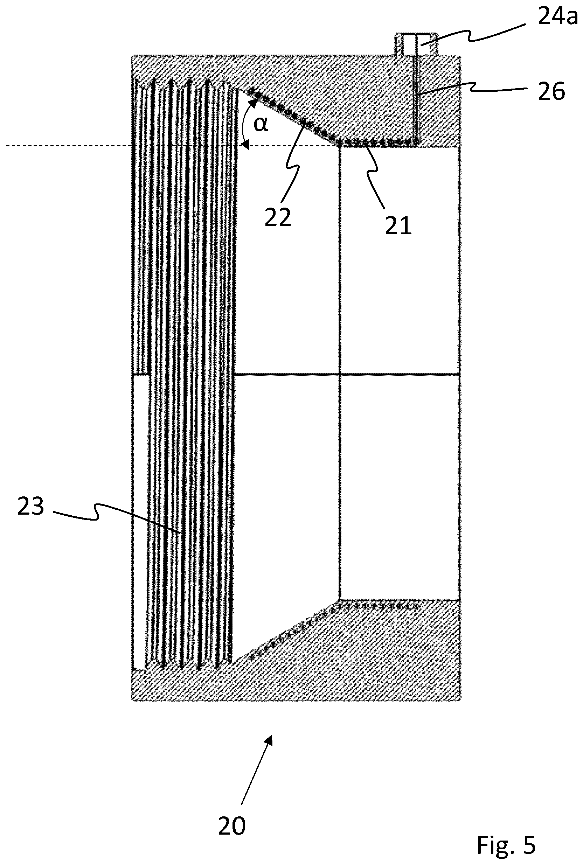

Fig. 5 ist ein Längsschnitt der zweiten Muffenhälfte 20.

Hinter dem Innengewinde 23 befindet sich ein konischer Bereich 22, in welchem sich, gesehen von der ersten Muffenhälfte aus, der Innendurchmesser vom Gewindedurchmesser ausgehend auf den Außendurchmesser des zu verbindenden Rohrstücks reduziert.

Der konische Bereich 22 ist in diesem Ausführungsbeispiel kegelstumpfförmig ausgebildet.

Zu dem angrenzenden zylindrischen Bereich folgt ein konischer Bereich 22, insbesondere mit einem Winkel α von 0 bis 90°, vorzugsweise von 35 bis 55°, besonders bevorzugt 40 bis 50 °.

Die Heizwendelzone 21 erstreckt sich sowohl über den konischen Bereich 22 als auch über den zylindrischen Bereich 21.

Über Durchführungen 26 durch die Wand der Muffenhälfte 20 ist die Heizwendelzone 21 mit den elektrischen Anschlüssen 24a, 24b verbunden.

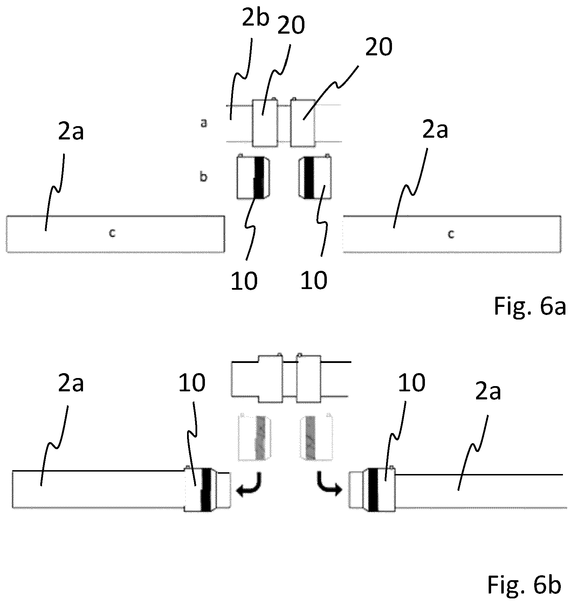

Fig. 6a bis Fig. 6d zeigen die Verfahrensschritte zum Verbinden von zwei Rohrenden gemäß einem Ausführungsbeispiel der Erfindung.

Fig. 6a zeigt die Situation, wie ein defektes Rohrstück repariert werden kann.

Das defekte Rohrstück wurde bereits herausgetrennt, so dass die zwei gegenüberliegenden Rohrenden 2a entstanden sind, welche jeweils ein erstes Rohrende im Sinne der Terminologie der Erfindung darstellen.

Zum Verbinden der ersten Rohrenden 2a wird in Schritt a ein Verbindungsstück 2b bereitgestellt, welches die zweiten Rohrenden 2b im Sinne der Erfindung ausbildet.

Weiter werden zwei Heizwendelmuffen mit jeweils erster Muffenhälfte 10 und zweiter Muffenhälfte 20 bereitgestellt (Schritt b).

In Schritt c wird, wie in Fig. 6b dargestellt, zunächst die erste Muffenhälfte 10 jeweils über das erste Rohrende 2a geschoben.

Vorzugsweise vor dem Aufschieben der ersten Muffenhälfte 10 wird das erste Rohrende 2a entsprechend vorbereitet, als zumindest gesäubert und getrocknet bzw. spanend, insbesondere gemäß DVS 2207-1 (2015-08), bearbeitet. Dabei wird mittels eines spanabhebenden Werkzeugs eine Schicht der Oberfläche entfernt.

In diesem Stadium kann nachlaufendes Medium, z.B. Wasser, aus zumindest einem der Rohrenden 2a austreten. Dies ist in diesem Zustand aber noch relativ unproblematisch, da das Rohrende 2a relativ gut zugänglich ist. So kann nachlaufendes Medium beispielsweise händisch mittels eines Lappens entfernt werden. Zudem ist je nach Lage des Rohrendes 2a die Gefahr, dass nachlaufendes Medium an der Unterseite des Rohrs entlang läuft, relativ gering.

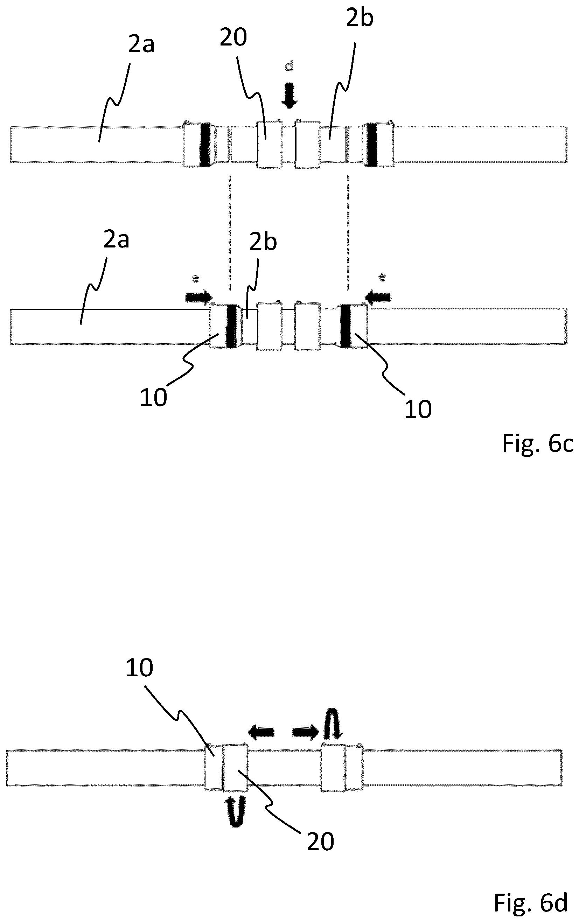

Wie in Fig. 6c dargestellt, wird nunmehr in Schritt d das Zwischenstück 2b mit den beiden zweiten Muffenhälften 20 eingesetzt.

Der Bereich, in welchem später die Heizwendelzone der ersten Muffenhälfte auf dem ersten Rohrende 2a aufliegt, ist in diesem Zustand bereits durch die Dichtungen der ersten Muffenhälfte vor nachlaufendem Medium geschützt.

Sodann wird in Schritt e die erste Muffenhälfte 10 jeweils über den Verbindungsbereich geschoben, so dass eine Dichtung sich um das erste Rohrende 2a und eine weitere Dichtung sich um das zweite Rohrende 2b erstreckt. Dabei muss die Oberfläche von Rohrende 2b ebenfalls die von Rohrende 2a vorab bearbeitet sein. In der Folge tritt aufgrund der Dichtungen kein nachlaufendes Medium mehr aus.

Die zweiten Rohrenden 2b können nunmehr gesäubert und, falls erforderlich, die Oberfläche mechanisch bearbeitet werden.

Sodann wird, wie in Fig. 6d dargestellt, die zweite Muffenhälfte 20 auf die erste Muffenhälfte 10 geschraubt.

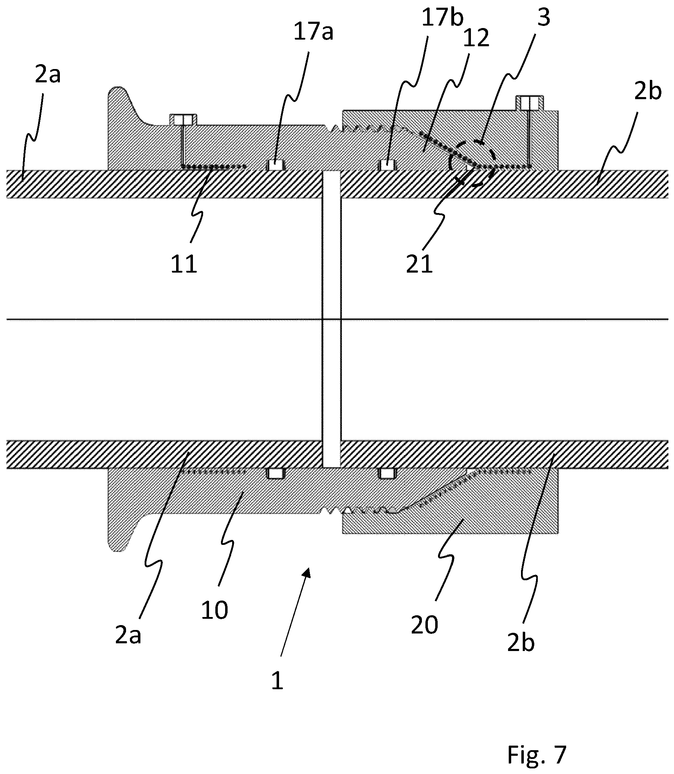

Fig. 7 ist ein Längsschnitt des nunmehr durch die Heizwendelmuffe 1 erzeugen Verbindungsbereiches.

Die erste Muffenhälfte 10 verbindet die Rohrenden 2a, 2b miteinander.

Die erste Muffenhälfte 10 umfasst einen zylindrisch ausgebildeten Heizwendelbereich 11, welcher sich um die Außenwand des Rohrendes 2a erstreckt.

Die nunmehr auf die erste Muffenhälfte aufgeschraubte zweite Muffenhälfte 20 umfasst eine einzige Heizwendelzone 21, welche sich sowohl über einen zylindrischen Bereich entlang der Außenwand des Rohrendes 2b als auch über den konischen Bereich 12 der ersten Muffenhälfte 10 erstreckt.

Über die Heizwendelzone 21 der zweiten Muffenhälfte 20 kann so in dem als 3 gekennzeichneten Bereich eine Schweißzone erzeugt werden, in welcher sowohl erste Muffenhälfte 10 als auch zweite Muffenhälfte 20 als auch das Rohrende 2b homogen miteinander verbunden sind.

Die Gewindeverbindung der Muffenhälfte 10, 20 sorgt auch bei Form- und Lagetoleranzen für eine hinreichende Kontaktfläche im Bereich der Heizwendelzone 21.

Nach dem Schweißen der Heizwendelmuffe 1 mittels der Heizwendelzonen 11 und 21 sind die beiden Rohrenden 2a, 2b vollständig über eine Schweißverbindung, also über eine stoffschlüssige Verbindung miteinander verbunden.

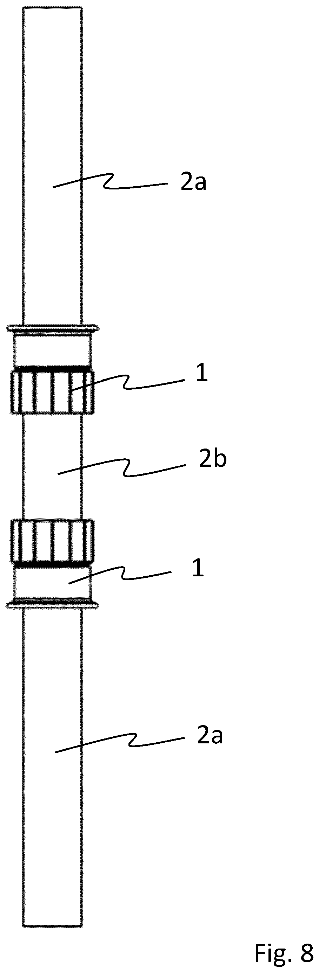

Fig. 8 zeigt nunmehr das reparierte Rohrstück, bei welchem die beiden Rohrenden 2a jeweils über eine Heizwendelmuffe 1 mit dem Verbindungsstück 2b verbunden sind.

Durch die Erfindung lässt sich auf einfache Weise ein Rohrsystem aus Kunststoff druckklassengerecht miteinander verbinden. Ein Eindringen von nachlaufendem Medium in eine Schweißzone wird vermieden, auch ohne dass vor dem Aufschieben der Heizwendelmuffe ein Dichtelement innen in die Rohrenden eingebracht werden muss.

### Bezugszeichenliste

- 1: Heizwendelmuffe
- 2a: erstes Rohrende
- 2b: zweites Rohrende/Verbindungsstück
- 3: Bereich homogener Verschweißung
- 10: erste Muffenhälfte
- 11: erste Heizwendelzone
- 12: konischer Bereich
- 13: Außengewinde
- 14a, 14b: Anschluss
- 15: Kragen
- 16: Durchführung
- 17a, 17b: Dichtung
- 20: zweite Muffenhälfte
- 21: zweite Heizwendelzone
- 22: konischer Bereich
- 23: Innengewinde
- 24a, 24b: Anschluss
- 25: Profilierung
- 26: Durchführung

## Patentansprüche

1. Heizwendelmuffe (1) zum Verbinden von Kunststoffrohren, umfassend eine auf einem Rohr verschiebbare erste Muffenhälfte (10), wobei die erste Muffenhälfte (10) zumindest zwei voneinander beabstandete Dichtungen (17a, 17b) umfasst,
wobei die Heizwendelmuffe (1) eine zweite Muffenhälfte (20) umfasst, welche mit der ersten Muffenhälfte (10) mechanisch verbindbar ist, wobei zumindest die erste und/oder zweite Muffenhälfte (10, 20) eine Heizwendelzone (11, 21) umfasst, **dadurch gekennzeichnet, dass** die Muffenhälften (10, 20) über eine ein Außengewinde (13) der ersten Muffenhälfte (10) und ein Innengewinde (23) der zweiten Muffenhälfte (20) umfassende Gewindeverbindung miteinander verbindbar sind.

2. Heizwendelmuffe (1) nach dem vorstehenden Anspruch, **dadurch gekennzeichnet, dass** sich eine, insbesondere eine einzige, Heizwendelzone (21) im verbundenen Zustand von der Innenwand einer Muffenhälfte, insbesondere der zweiten Muffenhälfte (20), ausgehend über die andere Muffenhälfte (10) erstreckt.

3. Heizwendelmuffe (1) nach einem der vorstehenden Ansprüche, **dadurch gekennzeichnet, dass** diese so ausgebildet ist, dass durch Verschieben der ersten Muffenhälfte (10) eine Fluidverbindung über einen Verbindungsbereich von zwei Rohren bereitstellbar ist, welche zumindest verhindert, dass ein nachlaufendes Medium aus dem Verbindungsbereich austritt

4. Heizwendelmuffe (1) nach einem der vorstehenden Ansprüche, **dadurch gekennzeichnet, dass** die Innenwand der zweiten Muffenhälfte (20) einen sich konisch aufweitenden Bereich aufweist, über den sich eine Heizwendelzone (21) erstreckt, wobei die erste Muffenhälfte (10) eine komplementär ausgebildete Außenwand aufweist.

5. Heizwendelmuffe (1) nach einem der vorstehenden Ansprüche, **dadurch gekennzeichnet, dass** die Innenwand der ersten Muffenhälfte (10) außerhalb der Dichtungen (17a, 17b) eine erste Heizwendelzone (11) aufweist und dass die zweite Muffenhälfte (20) eine zweite Heizwendelzone (21) aufweist, welche sich sowohl über die Innenwand der zweiten Muffenhälfte (20) als auch über den Verbindungsbereich der Muffenhälften (10, 20) erstreckt.

6. Heizwendelmuffe (1) nach einem der vorstehenden Ansprüche, **dadurch gekennzeichnet, dass** zumindest die erste Muffenhälfte (10) einen Griff umfasst, insbesondere einen Griff, der als Kragen (15) ausgebildet ist.

7. Heizwendelmuffe (1) nach einem der vorstehenden Ansprüche, **dadurch gekennzeichnet, dass** die Heizwendelmuffe (1) aus einem Thermoplast ausgebildet ist.

8. Verfahren zum Verbinden von zwei Rohrstücken mit einem nachlaufenden Medium unter Verwendung einer Heizwendelmuffe (1) nach einem der vorstehenden Ansprüche, umfassend die Schritte:
- Bereitstellen einer ersten Muffenhälfte (10) mit zumindest zwei voneinander beabstandeten Dichtungen (17a, 17b) und einer ersten Heizwendelzone (11),
- Bereitstellen einer zweiten Muffenhälfte (20) mit einer zweiten Heizwendelzone (21),
- Aufbringen der ersten Muffenhälfte (10) auf ein erstes Rohrende (2a),
Aufbringen der zweiten Muffenhälfte (20) auf ein zweites Rohrende (2b),
- Aufschieben der ersten Muffenhälfte (10) auf das zweite Rohrende (2b), wobei das erste und das zweite Rohrende (2a, 2b) durch die zwei voneinander beabstandeten Dichtungen (17a, 17b) dichtend mit einander verbunden werden,
- Verbinden der ersten und der zweiten Muffenhälfte (10, 20),
- Verschweißen des ersten Rohrendes (2a) mit der ersten Muffenhälfte (10) mittels der ersten Heizwendelzone (11),
- Verschweißen des zweiten Rohrendes (2b) mit der zweiten Muffenhälfte (20) und Verschweißen der zweiten Muffenhälfte (20) mit der ersten Muffenhälfte (10) mittels der zweiten Heizwendelzone (21).

9. Verfahren nach dem vorstehenden Anspruch, **dadurch gekennzeichnet, dass** die zweite Heizwendelzone (21) als eine einzige Heizwendelzone ausgebildet ist, welche sich über einen Bereich erstreckt, an welchem die Außenwand des zweiten Rohrendes (2b), die Innenwand der zweiten Muffenhälfte (20) und die Außenwand der ersten Muffenhälfte (10) aneinander grenzen.

10. Verfahren nach einem der vorstehenden Ansprüche 8 und 9, **dadurch**
**gekennzeichnet, dass** eine Schweißverbindung nach Richtlinie DVS 2207-1 (08/2015) erzeugt wird.

## Claims

1. A heating coil sleeve (1) for connecting plastic pipes, comprising a first sleeve half (10) displaceable on a pipe, the first sleeve half (10) comprising at least two spaced-apart seals (17a, 17b), wherein the heating coil sleeve (1) comprises a second sleeve half (20) which can be mechanically connected to the first sleeve half (10), wherein at least the first and/or the second sleeve half (10, 20) comprises a heating coil zone (11, 21); **characterised in that** the sleeve halves (10, 20) can be connected to one another via a threaded connection comprising an external thread (13) of the first sleeve half (10) and an internal thread (23) of the second sleeve half (20).

2. The heating coil sleeve (1) according to the preceding claim, **characterised in that**, in the connected state, a heating coil zone (21), in particular a single one, extends from the inner wall of one sleeve half, in particular the second sleeve half (20), over the other sleeve half (10).

3. The heating coil sleeve (1) according to any one of the preceding claims, **characterised in that** it is configured such that by displacing the first sleeve half (10), a fluid connection can be provided across a connection area of two pipes, which at least prevents a trailing medium from leaking from the connection area.

4. The heating coil sleeve (1) according to any one of the preceding claims, **characterised in that** the inner wall of the second sleeve half (20) has a conically widening portion across which a heating coil zone (21) extends, wherein the first sleeve half (10) has a complementarily formed outer wall.

5. The heating coil sleeve (1) according to any one of the preceding claims, **characterised in that** the inner wall of the first sleeve half (10) has a first heating coil zone (11) outside the seals (17a, 17b), and that the second sleeve half (20) has a second heating coil zone (21) which extends both across the inner wall of the second sleeve half (20) and across the connection area of the sleeve halves (10, 20).

6. The heating coil sleeve (1) according to any one of the preceding claims, **characterised in that** at least the first sleeve half (10) comprises a handle, in particular a handle in the form of a collar (15).

7. The heating coil sleeve (1) according to any one of the preceding claims, **characterised in that** the heating coil sleeve (1) is made of a thermoplastic.

8. A method for connecting two pipe sections with discharging medium using a heating coil sleeve (1) according to any one of the preceding claims, comprising the steps of:
- providing a first sleeve half (10) comprising at least two spaced-apart seals (17a, 17b) and a first heating coil zone (11);
- providing a second sleeve half (20) comprising a second heating coil zone (21);
- applying the first sleeve half (10) onto a first pipe end (2a);
- applying the second sleeve half (20) onto a second pipe end (2b);
- pushing the first sleeve half (10) onto the second pipe end (2b), whereby the first and second pipe ends (2a, 2b) are sealingly connected to one another by the two spaced-apart seals (17a, 17b);
- connecting the first and second sleeve halves (10, 20);
- welding the first pipe end (2a) to the first sleeve half (10) using the first heating coil zone (11);
- welding the second pipe end (2b) to the second sleeve half (20) and welding the second sleeve half (20) to the first sleeve half (10) using the second heating coil zone (21).

9. The method according to the preceding claim, **characterised in that** the second heating coil zone (21) is in the form of a single heating coil zone which extends across a region where the outer wall of the second pipe end (2b), the inner wall of the second sleeve half (20) and the outer wall of the first sleeve half (10) adjoin each other.

10. The method according to any one of the preceding claims 8 and 9, **characterised in that** a welded joint is produced in accordance with the DVS 2207-1 (08/2015) guideline.

## Revendications

1. Manchon à filament chauffant (1) pour raccorder des tuyaux en matière plastique, comprenant une première moitié de manchon (10) déplaçable sur un tuyau, cette première moitié de manchon (10) comprenant au moins deux joints d'étanchéité (17a, 17b) espacés, le manchon à filament chauffant (1) comprenant une seconde moitié de manchon (20) qui peut être raccordée mécaniquement à la première moitié de manchon (10), au moins la première et/ou la seconde moitié de manchon (10, 20) comprenant une zone à filament chauffant (11, 21),
**caractérisé en ce que** les moitiés de manchon (10, 20) peuvent être raccordées l'une à l'autre par une liaison filetée comprenant un filetage extérieur (13) de la première moitié de manchon (10) et un filetage intérieur (23) de la seconde moitié de manchon (20).

2. Manchon à filament chauffant (1) selon la revendication précédente, **caractérisé en ce qu'**à l'état raccordé, une zone à filament chauffant (21), en particulier une seule, s'étend de la paroi intérieure d'une moitié de manchon, en particulier de la seconde moitié de manchon (20), sur l'autre moitié de manchon (10).

3. Manchon à filament chauffant (1) selon l'une quelconque des revendications précédentes, **caractérisé en ce qu'**il est conçu de telle sorte que, par déplacement de la première moitié de manchon (10), une connexion fluidique peut être établie à travers une zone de raccordement de deux tuyaux, ce qui empêche au moins la fuite d'un fluide résiduel de la zone de raccordement.

4. Manchon à filament chauffant (1) selon l'une quelconque des revendications précédentes, **caractérisé en ce que** la paroi intérieure de la seconde moitié de manchon (20) présente une partie s'élargissant de manière conique sur laquelle s'étend une zone à filament chauffant (21), la première moitié de manchon (10) présentant une paroi extérieure formée de manière complémentaire.

5. Manchon à filament chauffant (1) selon l'une quelconque des revendications précédentes, **caractérisé en ce que** la paroi intérieure de la première moitié de manchon (10) présente une première zone à filament chauffant (11) à l'extérieur des joints d'étanchéité (17a, 17b), et **en ce que** la seconde moitié de manchon (20) présente une seconde zone à filament chauffant (21) qui s'étend à la fois sur la paroi intérieure de la seconde moitié de manchon (20) et sur la zone de raccordement des moitiés de manchon (10, 20).

6. Manchon à filament chauffant (1) selon l'une quelconque des revendications précédentes, **caractérisé en ce qu'**au moins la première moitié de manchon (10) comprend une poignée, en particulier une poignée en forme de collier (15).

7. Manchon à filament chauffant (1) selon l'une quelconque des revendications précédentes, **caractérisé en ce que** le manchon à filament chauffant (1) est réalisé en un thermoplastique.

8. Procédé de raccordement de deux éléments de tuyau avec de déversement de fluide à l'aide d'un manchon à filament chauffant (1) selon l'une quelconque des revendications précédentes, comprenant les étapes suivantes:
- prévoir un premier moitié de manchon (10) comprenant au moins deux joints d'étanchéité espacés (17a, 17b) et une première zone à filament chauffant (11),
- prévoir une seconde moitié de manchon (20) comprenant une seconde zone à filament chauffant (21),
- appliquer la première moitié de manchon (10) sur une première extrémité de tuyau (2a),
- appliquer la seconde moitié de manchon (20) sur une seconde extrémité de tuyau (2b),
- pousser la première moitié de manchon (10) sur la seconde extrémité de tuyau (2b), les première et seconde extrémités de tuyau (2a, 2b) étant ainsi reliées de manière étanche l'une à l'autre par les deux joints d'étanchéité espacés (17a, 17b),
- raccorder les première et seconde moitiés de manchon (10, 20),
- souder la première extrémité du tuyau (2a) à la première moitié de manchon (10) en utilisant la première zone à filament chauffant (11),
- souder la seconde extrémité du tuyau (2b) à la seconde moitié de manchon (20) et souder la seconde moitié de manchon (20) à la première moitié de manchon (10) en utilisant la seconde zone à filament chauffant (21).

9. Procédé selon la revendication précédente, **caractérisé en ce que** la seconde zone à filament de chauffage (21) est conçue comme une zone à filament de chauffage unique qui s'étend sur une région au niveau de laquelle la paroi extérieure de la seconde extrémité de tuyau (2b), la paroi intérieure de la seconde moitié de manchon (20) et la paroi extérieure de la première moitié de manchon (10) se rejoignent.

10. Procédé selon l'une quelconque des revendications précédentes 8 et 9, **caractérisé en ce qu'**un joint soudé est réalisé conformément à la directive DVS 2207-1 (08/2015).
